# EUROPÄISCHE PATENTSCHRIFT

(11) **EP 1 599 866 B1**
(45) Veröffentlichungstag und Bekanntmachung des Hinweises auf die Patenterteilung: **22.08.2007**
(21) Anmeldenummer: 03775344.9
(22) Anmeldetag: 12.11.2003
(51) Int. Cl.: G10L 15/18, H04M 3/493

(54) **SPRACHVERARBEITENDES SYSTEM UND VERFAHREN**
VOICE PROCESSING SYSTEM AND METHOD
SYSTEME ET PROCEDE DE TRAITEMENT LINGUISTIQUE

(30) Priorität: 13.11.2002 US 425856 P
(43) Veröffentlichungstag der Anmeldung: 30.11.2005
(73) Patentinhaber: Schönebeck, Bernd, 52080 Aachen (DE)
(72) Erfinder: Schönebeck, Bernd, 52080 Aachen (DE)
(74) Vertreter: Wengenroth, Kerstin
(86) Internationale Anmeldenummer: PCT/EP2003/012639
(87) Internationale Veröffentlichungsnummer: WO 2004/044888

(56) Entgegenhaltungen:
- WO-A-01/91110
- FR-A- 2 821 972
- US-A1- 2002 133 355
- MAST M ET AL: "A SPEECH UNDERSTANDING AND DIALOG SYSTEM WITH A HOMOGENEOUS LINGUISTIC KNOWLEDGE BASE" IEEE TRANSACTIONS ON PATTERN ANALYSIS AND MACHINE INTELLIGENCE, IEEE INC. NEW YORK, US, Bd. 16, Nr. 2, 1. Februar 1994 (1994-02-01), Seiten 179-193, XP000439829 ISSN: 0162-8828

## Beschreibung

Die vorliegende Erfindung, wie in Ansprüchen 1 und 16 definiert, betrifft ein sprachverarbeitendes System, umfassend:
- zumindest einen Extraktor als Einrichtung zur lexikalischen Zuordnung der zu verarbeitenden Sprache und
- zumindest einen Konnektor als Einrichtung zur Verknüpfung der lexikalisch zugeordneten Sprache zu einer Aussage.

Die Erfindung betrifft außerdem ein Verfahren zur automatischen Erfassung und Weiterberarbeitung der Bedeutung sprachlich gegebener Informationen. Die Bedeutung sprachlicher Botschaften wird anhand von Prozeduren, die Elemente menschlicher Sprachverstehensprozesse simulieren, durch das System rekonstruiert. Logisch falsche und sinnleere Aussagen werden identifiziert. Für mehrdeutige Aussagen wird in Abhängigkeit vom aktuellen Kontext eine eindeutige Interpretation generiert (kontextabhängige Disambiguierung). Im Laufe der Bedeutungserfassung wird ein Situationsmodell konstruiert und ständig aktualisiert. Auftretende Konflikte zwischen der aktuellen Situation (bzw. dem aktuellen Zustand eines zu steuernden Systems) und der Bedeutung sprachlicher Eingaben werden erkannt und dem Nutzer rückgemeldet. Optional kann spezifisches Expertenwissen für eine erweiterte Risikoanalyse eingesetzt werden.

Die Folgen der in sprachlichen Botschaften enthaltenen Handlungen und Ereignissen (bzw. Steuerungsbefehle) werden vom System antizipiert und im Rahmen einer virtuellen Umsetzung überprüft. Ausgehend von der virtuellen Realisierung wird die Bedeutung des sprachlichen Inputs in Steuerkommandos für nachgeschaltete technische Systeme/ Roboter umgesetzt.

Aus Mast, M. et al.: A Speech Understanding and Dialog System with a Homogeneous Linguistic Knowledge Base, IEEE Transactions on Pattern Analysis and Machine Intelligence, IEEE Inc. New York, US, Bd. 16, Nr. 2, 01.02.1994, Seiten 179 - 193, XP 000 439 829 ist ein sprachverarbeitendes System bekannt. Allerdings betrifft das System die reine Spracherkennung und nicht das Sprachverständnis. Außerdem sind in einer Wissensbasis, auf die im Rahmen der Sprachverarbeitung zugegriffen wird, neben den eigentlichen Begriffen, die den Worten der zu verarbeitenden Sprache zugeordnet werden, eine Vielzahl weiterer Informationen abgespeichert, so dass die Wissensbasis sehr groß ist und viele Ressourcen für die Speicherung des und den Zugriff auf den Inhalt der.Wissensbasis bindet. Die weiteren Informationen sind bspw. grammatikalische bzw. syntaktische Informationen zu den Begriffen (z.B. verschiedene grammatikalische Formen der Begriffe), um grammatikalisch bzw. syntaktisch unvollständige Sätze verstehen zu können, und feste Verknüpfungen zwischen den Begriffen.

Aus der DE 100 51 794 A1 sind spracherkennende Systeme bekannt, welche jedoch auf der Stufe einer einfachen tabellarischen Zuordnung verbleiben, so dass eine bedeutungsbasierte Verarbeitung nicht realisiert ist. Etwas weiter reichen die in der DE 100 50 808 A1 und in der DE 197 15 099 A1 offenbarten sprachverarbeitenden Systeme, die jedoch auf sehr enge Fachgebiete begrenzt sind und aus diesem Grunde ebenfalls auf ein Erkennen einer Bedeutung verzichten können. Hier wird darüber hinaus die Sprache vor ihrer lexikalischen Zuordnung bereits einem Filter unterzogen, so dass eine freie begriffliche bzw. eine vom aktuellen Kontext unabhängige Erfassung der Sprachbedeutung nicht erfolgt. Insbesondere operieren diese System nicht auf begrifflicher Ebene sondern setzen eine Reaktion aus einer bloßen grammatikalischen Verknüpfung bzw. aus vorher fest eingegebenen syntaktischen Verknüpfung gespeicherter Befehle zusammen.

Im Gegensatz zu den gängigen statistischen Verfahren zur Sprachverarbeitung analysiert das hier beschriebene System nicht Auftretenswahrscheinlichkeit von Klangfolgen (gesprochene Sprache) oder Zeichenketten (geschriebene Sprache), sondern extrahiert und verarbeitet die begriffliche Bedeutung sprachlicher Botschaften.

Erfindungsgemäß wird ausgehend von dem sprachverarbeitenden System der eingangs genannten Art vorgeschlagen, dass der Extraktor der zu verarbeitenden Sprache Begriffe zuordnet. Begriffe sind beispielsweise Objekte, Ereignisse, Eigenschaften (Begriffsklassen), bei denen einer Variable zugehörige Begriffe, Merkmale und/oder komplexere Strukturen zugeordnet sind, so dass durch diese Strukturen, wie Begriffe, Merkmale und/oder komplexere Strukturen der entsprechende Begriff mit Leben gefüllt und somit verstanden werden kann. Alle Kernprozeduren und Wissensbasen des Systems operieren daher sprachenunabhängig. Um den Input einer spezifischen Landesprache zu verarbeiten, ist lediglich das jeweilige sprachspezifisches Lexikon hinzuzufügen.

Gemäß einer vorteilhaften Weiterbildung der Erfindung wird vorgeschlagen, dass der Extraktor die zu verarbeitende Sprache auf Grundformen, also auf Infinitive, Nominative u.ä., reduziert. Auf Syntax kann verzichtet werden, da die Bedeutung aus der vorgenommenen Verknüpfung der Begriffe gewonnen wird. Dieses ist schneller und einfacher und erlaubt die Bedeutungsrekonstruktion auch bei syntaktisch/grammatikalisch falschen oder unvollständigen Eingaben. Andererseits können auch grammatikalische und syntaktische Regeln zur Verknüpfungen von Begriffen besonders bei semantisch nicht auflösbaren Ambiguitäten Berücksichtigung finden.

Die Idee beruht auf dem innovativen Konzept des Cogntiven Ergonomischen Systems (CES). CES gewährleistet erstmals das Verstehen von Text/Sprachinformationen durch technische Systeme und erlaubt eine automatische Bedeutungserfassung sprachlicher Informationen. Im Gegensatz zu den herkömmlichen Verfahren, welche auf der statistischen Auswertung von Zeichenketten beruhen, rekonstruiert das Cognitive Ergonomische System die Bedeutung sprachlicher Botschaften und erfasst deren Sinn. Durch die Bedeutungserfassung ist CES in der Lage, sowohl korrekte von logisch falschen Aussagen zu trennen, als auch auf mögliche Konsequenzen von Handlungen und Ereignissen zu schließen. Diese innovativen Leistungsmerkmale von CES bieten vielfältige Anwendungsmöglichkeiten auf unterschiedlichen Gebieten und gestatten:
**die Konstruktion von Dialog- und Auskunftssystemen,** die selbst syntaktisch/grammatikalisch unvollständige oder falsche Eingaben verarbeiten, online Kundenintentionen verstehen und selbständig alternative Produktangebote unterbreiten;
eine qualitative Verbesserung vorhandener **Tools für das Wissensmanagement,** um eine automatische Relevanzbewertung neuer Informationen nach nutzerspezifischen Kriterien zu erreichen;
die **Steuerung technischer Systeme und Roboter durch Sprache,** gekoppelt mit hervorragenden Sicherheitsstandards durch das vorausschauende Schließen auf Handlungsfolgen;
die Unterstützung der **Flug- bzw. Rollfeldüberwachung** sowohl in der Luft als auch am Boden, wobei sprachliche Anweisungen in ihrer Bedeutung erfasst und in ihren Konsequenzen antizipiert werden. So lassen sich auftretende Konflikte zwischen verschiedenen sprachlichen Anweisungen einerseits sowie zwischen sprachlich gegebenen Anweisungen und den daraus resultierenden Handlungen an Luftfahrzeugen andererseits erkennen, so dass hiervor gewarnt werden kann.

Die außergewöhnliche Performance von CES beruht auf der Simulation von cognitiven Prozessen, die dem menschlichen Sprachverstehen zugrunde liegen.

Das Kernsystem von CES besteht aus einem Intelligenzmodul und einer begrifflichen Wissensbasis. Die Bedeutung der natürlich-sprachlichen Information wird mit der Wissensbasis erfaßt und durch das Intelligenzmodul interpretiert. Weitere Module dienen der Disambiguierung mehrdeutiger Aussagen, der Überprüfung evtl. Handlungsfolgen sowie der Konstruktion eines aktuellen Situationsmodells. Durch das Zusammenspiel von Wissensbasis und Intelligenzmodul werden prinzipielle Mechanismen und Leistungsmerkmale des menschlichen Denkens nachgebildet, u.a.:
1. **Die Bedeutungserkennung** natürlich-sprachlicher Informationen, einschließlich
   des Erkennens sinnvoller Aussagen auch bei **syntaktisch/grammatikalisch unvollständigen** bzw. fehlerhaften Angaben
   der Identifizierung / Ablehnung von **sinnleeren Aussagen**
   der Identifizierung / Ablehnung von **logisch falschen Aussagen.**
2. **Das schlussfolgernde Denken,** einschließlich
   dem Erkennen und der logischen Umsetzung von **Handlungskonsequenzen**
   dem **vorausschauendem Schließen** auf zukünftige Handlungsfolgen.

Unterschieden werden muss zwischen Spracherkennung und Sprachverstehen. Während Spracherkennung lediglich das Herausfiltern der sprachlichen Lautfolgen aus Umgebungsgeräuschen leistet, schließt das Sprachverstehen die Bedeutungserkennung ein. Beispielsweise wird eine unbekannte Fremdsprache zwar als Sprache identifiziert, jedoch nicht verstanden.

Das Cognitive Ergonomische System (CES) erfasst die Bedeutung der in sprachlichen Informationen enthaltenen Begriffe und unterscheidet sich damit prinzipiell von den z.Z. im Bereich der natural language processing (NLP) üblichen mathematisch/statistischen Analysen von Zeichen- bzw. Buchstabenketten, welche zumeist auf dem Bayes-Theorem oder Hidden-Markov-Modellen basieren. Durch Verknüpfung und Kombination der im natürlich-sprachlichen Input enthaltenen Begriffe nach den Regeln des menschlichen Denkens rekonstruiert CES die Bedeutung der sprachlichen Botschaft. Basierend auf der begrifflichen Wissensbasis prüft das System danach die Sinnhaftigkeit der ermittelten Aussage. Dadurch ist eine Bewertung des Sprachinputs sowohl nach logischen Kriterien (richtig/falsch), als auch inhaltlichen Kriterien (relevant/irrelevant) möglich. Diese innovativen Leistungsmerkmale eröffnen vielfältige Anwendungen auf unterschiedlichen Gebieten.

### Wissensmanagement

"Wir leben im Zeitalter der Informationsgesellschaft" - ist eine oft getätigte, den Zeitgeist reflektierende Aussage. Mit der Einführung der Mikrocomputer bzw. der PCs ist die Verarbeitung/Nutzung großer Mengen von Information zunächst möglich und inzwischen auch notwendig geworden: "Ein systematischeres Vorgehen beim Strukturieren, Dokumentieren und Nutzen von Wissen ist auch für kleine Unternehmen überlebenswichtig, ... wobei es zunehmend schwieriger wird, marktrelevantes Wissen im Zeitalter der Informationsflut von irrelevanten Informationen zu trennen" (Antoni, Sommerlatte (Hrsgb.), In: "Report Wissensmanagement").

Benötigt werden also intelligente Systeme, die Texte automatisch verarbeiten und in Bezug auf ihre Relevanz bewerten. Solche Systeme müssen in der Lage sein, den Sinn der eintreffenden Information zu erfassen. Erst wenn die Information verstanden worden ist, kann diese mit dem vorhandenem Vorwissen verglichen und abschließend anhand nutzerspezifischer Kriterien ihre Relevanz für den Nutzer bewertet werden. Durch die aktuellen am Markt befindlichen Systeme erfolgt die Relevanzbewertung auf der Grundlage der Auftretenshäufigkeit / Auftretenswahrscheinlichkeit gesuchter Muster, d.h. von Zeichenketten oder Buchstabenfolgen. Die von den Zeichenketten bzw. Wörtern transportierte Bedeutung wird nicht erkannt, was eine Einbeziehung von nutzerspezifischem Wissen in die Relevanzbewertung unmöglich macht.

CES stellt im Expertenwissen spezielle Slots für die Implementierung von nutzerspezifischem Wissen bereit. Für die automatische Relevanzabschätzung wird zunächst die Bedeutung der neuen Information extrahiert, mit dem Inhalt der vorhandenen Wissensbasis verglichen und abschließend durch das Intelligenzmodul anhand des Expertenwissens nach nutzerspezifischen Kriterien eine Relevanzbewertung abgeleitet.

### Spracherkennung/Schrifterkennung

Technische Systeme zur Erkennung der gesprochenen Sprache sind bereits von verschiedenen Anbietern am Markt. Eine Anwendung ist beispielsweise die automatische Umsetzung von gesprochener Sprache in Schriftsprache. So kann der Nutzer einen Brief nicht nur über die Tastatur eingeben, sondern ihn seinem Computer auch diktieren. Das Grundprinzip ist eine direkten Umsetzung der aufgenommenen Klangbilder in Zeichenketten, wobei die korrekte Schreibweise bekannter Wörter über eine Wissensbasis (internes Lexikon) gewährleistet wird.

Trotz hoher technischer Standards ist die Fehlerquote bei der akustischen Erkennung - bedingt durch akustische Störfaktoren (individuell unterschiedliche oder undeutliche Aussprache, Dialekte, irrelevante Geräusche) - noch beträchtlich. Paradoxerweise erhöht sich die Fehleranfälligkeit der Systeme mit größer werdender Wissensbasis bzw. bei einem größeren Lexikon. Durch akustische Störquellen können nämlich auch falsche lexikalische Einträge aktiviert werden, beispielsweise "Kasse" oder "Tasche" statt "Tasse". Es entstehen sinnlose Aussagen wie "Sie trank zwei Kassen Kaffe", anstatt "Sie trank zwei Tassen Kaffe". Da die am Markt befindlichen Systeme den Sinn sprachlicher Äußerungen nicht erfassen, können diese Fehler nicht erkannt werden. Durch statistische Berechnungen wird versucht, derartige Fehler auszuschließen. So kann an umfangreichen Übungstexten berechnet werden, daß die Wahrscheinlichkeit der Buchstabenfolge "TASSEN KAFFEE" generell größer ist, als "KASSEN KAFFEE". Ausgehend von diesen Wahrscheinlichkeitswerten könnte die zweitgenannte Interpretation als weniger wahrscheinlich verworfen werden. Die Schwachstellen dieser Vorgehensweise sind offensichtlich, sie
ist nur auf in den "Übungstexten" bereits enthaltene Kombinationen von Buchstabenfolgen anwendbar,
kann zwischen Alternativen mit ähnlichen Wahrscheinlichkeitswerten nicht sinnvoll unterscheiden,
führt bei inhaltlich korrekten, aber mit nur geringer Wahrscheinlichkeit auftretenden Buchstabenketten zu Problemen,
ist durch den hohen Berechnungsaufwand für eine online Sprachanalyse nur bedingt tauglich u.a.m.

Die gegenwärtigen akustischen Spracherkenner sind bei günstigen Umgebungsbedingungen in der Lage, sprachliche Lautfolgen zu erfassen und von irrelevanten Geräuschen zu unterscheiden. Es kann jedoch lediglich der Klang, nicht der Sinn sprachlicher Botschaften erfasst werden. Daraus resultiert die Fehleranfälligkeit bzw. Mehrdeutigkeit der Spracherkennung bei Sprecherwechsel und ungünstigen Signal/Rauschverhältnissen. Eine mit CES realisierte Bedeutungserkennung gestattet dagegen beim Vorliegen mehrerer akustisch möglicher Alternativen das inhaltliche passende Wort aus dem Lexikons auszuwählen und so Fehler zu vermeiden. Eine Lernphase mit umfangreichen Übungstexten entfällt ebenso, wie aufwendige statistische online Analysen. Mit Hilfe des Intelligenzmoduls können beliebige (d.h. auch erstmals auftretende) Kombinationen aller im Lexikon enthaltenen Begriffen verarbeitet werden. Durch CES wird erstmals eine semantisch-inhaltliche Verifizierung und Korrektur der von akustischen Sprachkennern vorgenommenen Analyse möglich.

### Dialogsysteme & Customer Relationship Management

Für die Konstruktion effizienter und mächtiger Dialogsysteme bilden die bereits beschriebenen Performanceeigenschaften von CES aus dem Bereich der Spracherkennung und des Wissensmanagements eine hervorragende Grundlage. Die Verknüpfung beider Komponenten führt zu Synergieeffekten, die es u.a. ermöglichen, Absichten und Intentionen von Kunden während eines Dialoges zu erkennen. Dies sei am Fall einer Suchmaschine - stellvertretend für den einfachsten Fall eines Dialogsystems - demonstriert.

Angenommen, ein Nutzer sucht nach "Goldfisch" und "Guppy". CES würde die Suche selbständig auf alle Zierfische ausdehnen (bzw. eingrenzen), bei Bedarf eine Suche nach Zierfischhändlern initiieren u.a.m..'Einem Nutzer, der "Makrele" und "Heilbutt" sucht, würde das System bevorzugt Speisefische anbieten oder eine Suche nach Fischrestaurants vorschlagen können. Im Gegensatz zu am Markt befindlichen Produkten benötigt CES keine weiteren Information über den Nutzer, sondern erschließt die jeweilige Intention "Speisefische" vs. "Zierfische" allein anhand der angegebenen Suchwörter mit Hilfe des Intelligenzmoduls.

Mit CES ausgestattete Dialogsysteme gestatten - im Gegensatz zu den aktuell verfügbaren Systemen - auch die Interpretation von akustisch unvollständig erkannten oder syntaktisch/grammatikalisch fehlerhaften Eingaben. Darüber hinaus gestattet es CES, ohne spezielles Vorwissen über Kunden deren Intentionen allein aus einer inhaltlichen Analyse ihrer Anfrage online abzuleiten und so automatisch alternative Produktangebote zu unterbreiten.

### System- und Robotersteuerung durch Spracheingabe

Während in den o.g. Gebieten die Leistung vorhandener kommerzieller Systeme mittels CES qualitativ verbessert wird, sind im Bereich der Sprachsteuerung bisher keine praxistauglichen Systeme am Markt. Dies liegt u.a. darin begründet, dass für die sprachliche Steuerung technischer Systeme bisher zumeist einzelne, aus der natürlich-sprachlichen Äußerung zu separierende Schlüsselwörter benutzt werden. Als Steuerungssignal dient das akustische Klangbild der sprachlichen Äußerung, nicht seine Bedeutung.

Erst die Verwendung von CES eröffnet die Möglichkeit, die inhaltliche Bedeutung natürlich-sprachlicher Äußerungen für die Steuerung technischer Systeme zu verwenden. Mehrdeutige Aussagen werden von CES kontextsensitiv disambiguiert. So wird die Aussage "schleifen Werkstück" als Handlungsanweisung akzeptiert; "schleifen Rekrut" dagegen je nach Umfang der Wissensbasis entweder als Metapher verstanden oder als sinnleere Äußerung abgelehnt.

Roboter bzw. technische Systeme werden befähigt, den sprachlichen Input nach logischen und inhaltlichen Kriterien zu analysieren (richtig/falsch, sinnvoll/sinnleer). Am Ende der Analyse entsteht eine eindeutige Interpretation der Spracheingabe. Gleichzeitig potenziert sich die Flexibilität der Sprachsteuerung. Das System wird befähigt, auch aus vorher nicht explizit gelernten Wortkombinationen (Synonymen, Umschreibungen) sinnvolle Kommandos zu rekonstruieren.

Da CES Handlungskonsequenzen erkennt und mit Fähigkeiten zum vorausschauendem Schließen auf zukünftige Handlungsfolgen ausgestattet ist, kann der Anwender vor der Ausführung von Handlungen oder Steuerungseingriffen auf Sicherheitsrisiken hingewiesen werden. Alternativ können a posteriori bestimmte Handlungsfolgen in der Wissensbasis als illegal klassifiziert werden. Dies kann für eine automatische situationsangepasste Sperrung von Handlungen bzw. Regelungseingriffen genutzt werden.

Ein weiteres Anwendungsfeld betrifft den Bereich der "accessibility" d.h. der Schaffung von Zugriffsmöglichkeiten für behinderte Personen. Bei in den USA zum Vertrieb zugelassene Software sind derartige Hilfen Pflicht, in der Europäischen Union sind entsprechende Richtlinien in Vorbereitung. Durch die Implementierung eines Moduls zur Sprachsteuerung kann dieser Forderung entsprochen werden.

### "semantisches WEB"

Die Internetseiten sind von Menschen für Menschen gestaltet, d.h. auf die menschliche Informationsverarbeitung zugeschnitten. Ihre automatisierte maschinelle Verarbeitung trifft daher auf Hindernisse. Der unter dem Schlagwort "semantisches WEB" z.Z. am Massachusetts Institut of Technology (MIT) entwickelte Ansatz sieht vor, alle Internetseiten zukünftig doppelt zu kodieren. Neben der für den Menschen sichtbaren Seite soll die enthaltenen Information gleichzeitig in einem maschinell lesbaren Code vorliegen. Diese Vorgehensweise wird nur von Erfolg gekrönt sein, wenn alle zukünftigen Internetgestalter eine Verdoppelung des Arbeitsaufwandes für Internetpräsentationen in Kauf nehmen und ihre Seiten zweifach kodieren. In der Verbindung mit CES können die vorhandenen technischen Systeme ("Spider", Suchmaschinen u.ä.) befähigt werden, eine automatische Erfassung, Katalogisierung, Suche und Bewertung von Informationen im Internet direkt anhand der vorhandenen natürlich-sprachlichen Informationen (den Textseiten) vorzunehmen.

Die Verbindung vorhandener Internetools mit der innovativen CES-Technologie ermöglicht es, die Idee des "semantischen WEB" ohne den anderenfalls notwendigen zusätzlichen Aufwand bei der Gestaltung von Internetpräsenzen zu realisieren.

Die z.Z. am Markt befindlichen NLP-Systeme beruhen auf Wahrscheinlichkeitsberechnungen über das gemeinsame Auftreten von Buchstabenfolgen bzw. Zeichenketten. Damit kann jedoch die Bedeutung der analysierten Zeichenketten nicht erfasst oder beschrieben werden. Im Gegensatz dazu erfasst CES die Bedeutung sprachlicher Botschaften einschließlich der Handlungs- bzw. Ereignisfolgen. Diese geschieht in drei globalen Verarbeitungsschritten.

**Bedeutungsrekonstruktion:** alle Begriffe einer Aussage werden sinnvoll verknüpft

### Konfliktanalyse: Überprüfung, ob die rekonstruierte Bedeutung

a). der aktuellen Situation angemessen ist
b). unerwünschte Nebeneffekte /Seiteneffekte auftreten

### Realisierung: die Aussage und ihre Folgen werden virtuell (oder durch ein angeschlossenes technisches System real) umgesetzt.

CES ist in der Lage, auch vorher nicht gelernte Kombinationen von Wörtern zu verstehen: die Beziehungen zwischen den Wörtern eines sprachlichen Inputs sind nicht in der Wissensbasis gespeichert, sondern werden mittels cognitiver Prozeduren durch das Intelligenzmodul online erzeugt. Die Wissensbasis von CES ist daher in höchstem Maße ökonomisch (äußerst geringer Speicherbedarf: ca. 1MB für 7000 Begriffe) und flexibel: beliebige Kombinationen aller im Lexikon enthaltenen Wörter können analysiert werden. Jeder neue Eintrag (Wort bzw. Begriff) wird in die Wissensbasis integriert und verbessert automatisch deren Struktur und Leistungsfähigkeit. Anders ausgedrückt: CES versteht und bewertet natürlich-sprachliche Informationen durch die Simulation des menschlichen Sprachverstehens.

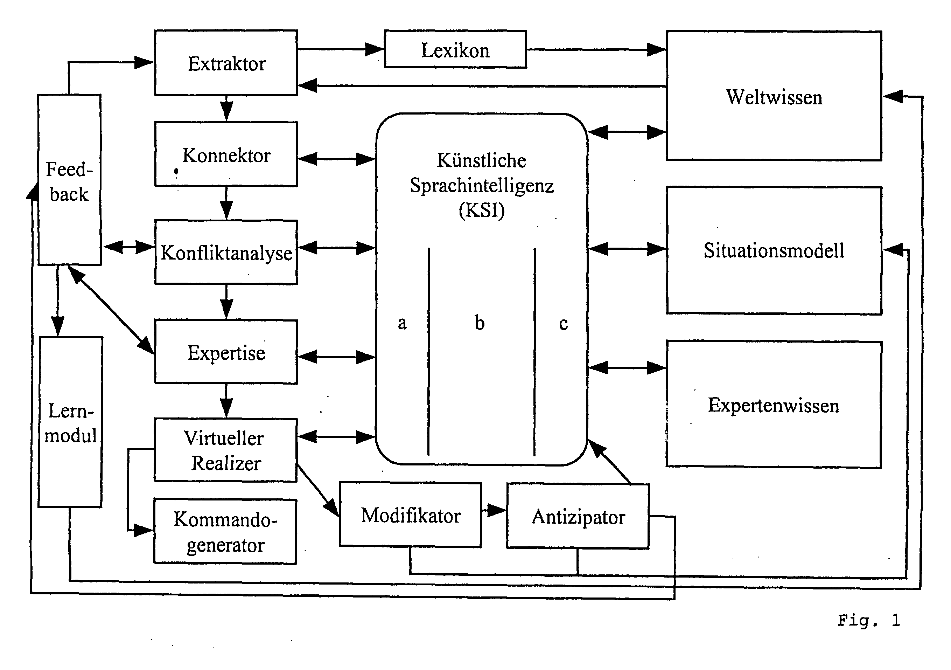

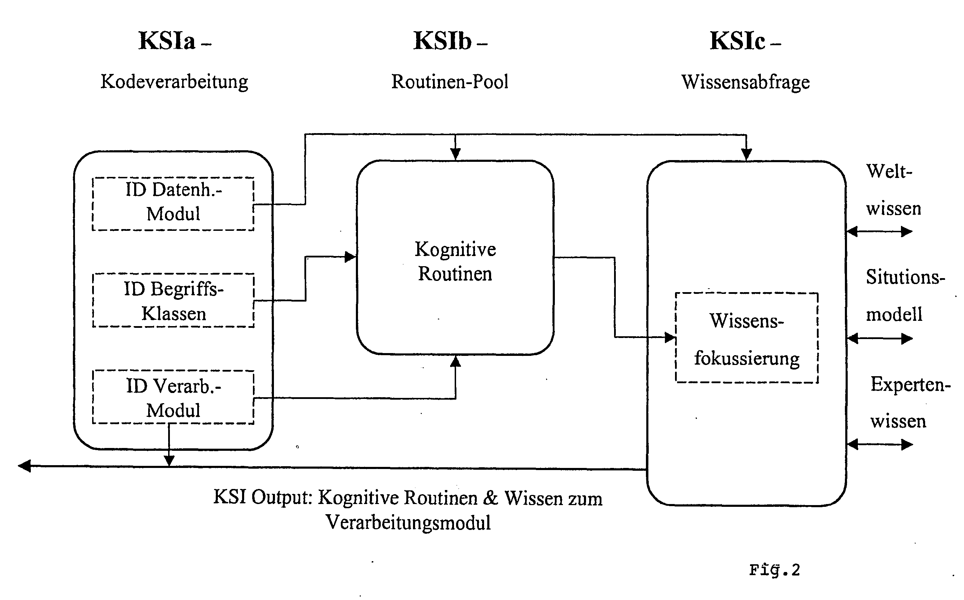

Das Cognitive Ergonomische System (CES) ist modular aufgebaut (Abb. 1a). Es besteht aus einer Reihe von Verarbeitungsmodulen (Extraktor, Konnektor, Konfliktanalyse, Expertise, Virtueller Realizer mit Modifikator und Antizipator und ggf. einem Kommandogenerator) und Datenhaltungsmodulen (Weltwissen, Situationsmodell, Expertenwissen, Lexikon). CES beigeordnet ist ein Feedbackmodul und ein Lernmodul. Die Verarbeitungsmodule gewährleisten die Rekonstruktion und Weiterverarbeitung der inhaltlichen Bedeutung eines sprachlich gegebenen Inputs und ggf. deren Umsetzung in ausführbare Steuerkommandos für nachgeschaltete technische Anlagen oder Roboter.

Sprachlicher Input kann in Form von Klangfolgen (mündliche Sprache) oder Zeichenketten (Schriftsprache) auftreten. CES operiert auf der Ebene von Begriffen, also mit jenen Information, die hinter den akustischen oder schriftlichen Zeichenketten stehen. Der Zugriff auf die begriffliche Bedeutung des sprachlichen Inputs erfolgt über ein entsprechendes Lexikon, welches die o.g. Zeichenketten enthält.

Das notwendige begriffliche Hintergrundwissen stellen die drei Datenhaltungsmodule Weltwissen, Situationsmodell und Expertenwissen zur Verfügung. Das Weltwissen enthält ein für die konkrete Anwendung notwendiges Minimum an Allgemeinwissen. Dieses Wissen wird durch verschiedene Begriffsklassen, wie Ereignisse (z.B. kochen, Gerichtsverhandlung), Objekte (Herd, Richter), Hinweise (mit, falls, über), Zahlwörter u.a.m. repräsentiert.

Im Expertenwissen (optionale Wissensbasis) kann bei Bedarf spezielles Hintergrundwissen abgelegt werden (z.B. der physikalische Wirkungsmechanismus einer Mikrowelle, spezielle gesetzliche Regelungen wie das Ladenschlussgesetz u.a.m.).

Das Situationsmodell wird im Laufe der Verarbeitung von CES erzeugt. Es enthält Informationen über den aktuellen situativen Kontext (kumuliert die Bedeutung der bisher gegebenen sprachlichen Informationen und bei nachgeschalteten technischen Anlagen deren aktuellen Systemzustand). Bei Beendigung/ Unterbrechung einer Verarbeitungssitzung kann die im Situationsmodell enthaltenen Information gespeichert und bei Bedarf wieder geladen werden. Es wird vorgeschlagen, dass das Situationsmodell eine Schnittstelle zu einer Messeinrichtung aufweist. Auf diese Weise erhält CES "Augen" bzw. "Tastsinne", die eine externe Eingabe bzw. eine Überprüfung tatsächlicher Gegebenheiten in Bezug auf antizipierte Gegebenheiten ermöglichen. Vorteilhafterweise ordnet die Schnittstelle den Messwerten Begriffe zu, wobei diese Messwerte und/oder Systemzustände nachgeschalteter technischer Anlagen im Situationsmodell durch Begriffe repräsentiert sind.

Alle drei Datenhaltungsmodule verwenden Forschungsergebnisse der Cognitive Sciences (Hirnforschung, kognitive Psychologie, künstliche Intelligenz) und folgen den Prinzipien der Wissensrepräsentation im menschlichen Gedächtnis.

Die künstliche Sprachintelligenz (KSI) ist die Schnittstelle zwischen den Datenhaltungsmodulen und den Verarbeitungsmodulen. Ihre Aufgabe besteht darin, den Verarbeitungsmodulen die jeweils benötigten kognitiven Routinen zur Verfügung zu stellen und den Informationsaustausch mit den Datenhaltungsmodulen zu koordinieren. Die Verarbeitungsmodule können dann eine kodierte Anfrage an KSI stellen. Der Kode setzt sich beispielsweise aus mehreren Identifikationsnummern (ID) zusammen: die ID des anfragenden Moduls, die ID der zu verarbeitenden Begriffsklassen, die ID des abzufragenden Datenhaltungsmoduls (s. Abb. 1b). Zunächst erfolgt vorzugsweise die Kodeverarbeitung (KSIa). Die Kombination der ID's bestimmt beispielsweise die aus dem Pool zu wählenden kognitiven Routinen (KSIb). Die ID des Datenhaltungsmoduls aktiviert eine Wissensabfrage aus Weltwissen, Situationsmodell oder Expertenwissen. Dazu wird vorgeschlagen, dass das KSI-Modul oder dessen cognitive Routinen auf Weltwissen, Situationsmodell und/oder Expertenwissen zurückgreifen, für die Routinen selbst aber auch für die Auswahl der geeigneten Routinen.

Das extrahierte Wissen wird dann vorzugsweise in einem Buffer bereitgestellt und durch eine Subroutine auf relevante Anteile reduziert (Wissensfokussierung, KSIc). Abschließend werden ausgewählte kognitiven Routinen und aktivierte Wissensstrukturen dem anfragenden Verarbeitungsmodul (identifiziert anhand seiner ID) übergeben. Die Umsetzung kann auch ohne ID's erfolgen, wobei der Kode vorzugsweise Informationen über das anfragende Modul, die zur verarbeitenden Begriffsklassen, das zu verwendende Datenhaltungsmodul und möglicherweise weitere, benötigte Informationen Die Kombination des Kodes bestimmt die Routinen, die dann dem entsprechenden Verarbeitungsmodul übergeben werden können.

Die kognitiven Routinen der künstlichen Sprachintelligenz beruhen auf der Simulation kognitiver Prozesse, die dem menschlichen Sprachverstehens zugrunde liegen. Ihre verbale Beschreibung ist nur bedingt möglich. Auf dem gegenwärtigen Entwicklungsstand verwendet CES vier Klassen von Routinen, die vereinfacht wie folgt beschrieben werden können: Routinen zur Bedeutungsextraktion, zur kontextgebunden Modifikation, zur kontextgebundenen Assoziation und Schlussprozesse (Inferenzen).

Die Bedeutungsextraktion umfasst neben dem Wissenszugriff auch die Verknüpfung von Begriffen und eine darauf beruhende dynamische Bedeutungszuweisung. Eine dynamische Bedeutungszuweisung ist bei größeren Wissensbasen zwingend notwendig, da in der natürlichen Sprache situationsbedingt jeweils verschiedene Aspekte von Begriffen relevant sind. Im Kontext eines Umzuges ist ein Flügel in erster Linie schwer und sperrig, im Kontext eines Konzertbesuches besticht sein Klang. Im Kontext des Flugzeugbaus ist ein Flügel kein Musikinstrument, besteht aber auch nicht aus Federn. Die dynamische Bedeutungszuweisung ermöglicht es CES, die potentiell mögliche Bedeutungsvielfalt der verarbeiteten Begriffe entsprechend des jeweiligen Kontextes einzuschränken.

Die Mehrdeutigkeit der natürlichen Sprache wird auch von den Routinen zur kontextgebundene Modifikationen berücksichtigt. So bedingt die Verknüpfung "grünes Blatt" die Zuweisung eines Farbtones, "grüner Junge" dagegen nicht.

Kontextgebundene Assoziationen führen zu zeitweiligen Verbindungen zwischen begrifflichen Strukturen. So sind Besitz und Ort von Objekten u.U. assoziiert.

Durch inferentielle Schlussprozesse kann CES erkennen, ob unter den vorliegenden Bedingungen eine Aussage logisch korrekt ist bzw. wann bestimmte Ereignisfolgen eintreten.

Die Verarbeitung des sprachlichen Inputs beginnt mit der sukzessiven Verarbeitung der einzelnen Wörter. Der Extraktor ermittelt nach Zugriff auf ein sprachspezifisches Lexikon aus der allgemeinen Wissensbasis bzw. dem Weltwissen Begriffe, die der jeweils isolierten Bedeutung der einzelnen Wörter entsprechen. Vorteilhafterweise verknüpft der Konnektor in einem iterativen Prozess alle extrahierten Begriffe zu einer Aussage. Vorzugsweise verknüpft der Konnektor Begriffe, die entsprechend dem sprachlichen Input zugeordnet wurden, zu einer Aussage. Für diese Verknüpfungen stellt die Künstliche Sprachintelligenz (KSI) kognitive Routinen zur Verfügung, die in Abhängigkeit von der durch den Extraktor ermittelten Begriffsklassen ausgewählt werden. Durch die Integration aller Begriffe in eine Aussage wird die Bedeutung der sprachlichen Botschaft rekonstruiert. Begriffe, für die keine Verknüpfung gelingt, werden an das Feedbackmodul weitergegeben. Fügt der Konnektor Begriffe zur ursprünglichen Eingabe hinzu (vgl. Ausführungsbeispiele), werden diese ebenfalls dem Feedbackmodul gemeldet. Es wird vorgeschlagen, dass der Konnektor nicht zu verknüpfende Teile der zu verknüpfenden Sprache, insbesondere nicht zu verknüpfende Begriffe, und/oder hinzugefügte Worte oder Begriffe einem Feedbackmodul zur Überprüfung durch den Nutzer oder eine sonstige externe Instanz weiterleitet.

Übersteigt die Menge der nicht verknüpften Begriffe eine definierte Anzahl, wird der gesamte Input als sinnleere Aussage gewertet. Diesbezüglich wird vorgeschlagen, dass nicht verknüpfte Begriffe markiert werden und vorzugsweise ein Fehlerzustand angenommen wird, wenn die Zahl der nicht verknüpften Begriffe eine definierte Anzahl übersteigt. Unbekannte Begriffe können über ein Lernmodul in das Weltwissen eingespeist und sofort mitverarbeitet werden.

Vorzugsweise umfasst das System:
- ein Konfliktmodul,
- ein Feedbackmodul,
- eine Experteneinrichtung zur Risikoanalyse,
- einen virtuellen Realizer zur Umsetzung der rekonstruierten Bedeutung,
- einen dem Konnektor nachgeschalteten Modifikator zur eventuell notwendigen Veränderung der in der im Konnektor gewonnenen Aussage enthaltenen Begriffe und/oder
- einen Anitizipator zum Aufruf potentieller Folgeereignisse als Verarbeitungsmodule.

Sinnvoll rekonstruierte Aussagen werden vom Konnektor an das Konfliktmodul übergeben. Das Konfliktmodul initiiert eine Überprüfung der rekonstruierten Bedeutung innerhalb des aktuellen Situationskontextes. Dazu werden vom Konfliktmodul spezielle Routinen der KSI angefordert, die einen Abgleich des im Situationsmodel gespeicherten Kontextes mit der vom Konnektor rekonstruierten Bedeutung ermöglichen. Im Allgemeinen gültige Aussagen, die jedoch aufgrund der aktuellen Situation nicht realisierbar sind, werden vom Konfliktmodul erkannt und an das Feedbackmodul weitergegeben. Bei der Steuerung nachgeschalteter Anlagen/Roboter können durch das Konfliktmodul aufgrund des aktuellen Kontextes zeitweise nicht mögliche Reglungsanweisungen/Kommandos identifiziert und über das Feedbackmodul dem Nutzer rückgemeldet werden.

Im aktuellen Situationskontext mögliche Aussagen oder Steuerungsanweisungen können bei vorliegendem Expertenwissen optional einer Risikoanalyse unterzogen werden. Diese Expertise prüft mittels spezieller Routinen, ob aus dem Expertenwissen im Rahmen der Konfliktanalyse bisher nicht erkannte Seiteneffekte bei Realisierung der rekonstruierten sprachlichen Aussage bzw. Steueranweisung / eines Kommandos ableitbar sind. Erkannte Gefährdungen werden über das Feedbackmodul dem Nutzer mitgeteilt. Nach erfolgreicher Expertise wird die rekonstruierte Bedeutung des sprachlichen Inputs im Virtuellen Realizer umgesetzt. Dies beinhaltet ggf. Veränderungen der im Konnektor verknüpften Begriffe durch den Modifikator sowie den Aufruf potentieller Folgeereignisse durch den Antizipator. Die Informationen von Modifikator und Antizipator werden in das Situationsmodell integriert und gewährleisten stets ein aktuelles Update des Situationsmodells. Antizipierte Folgeereignisse werden an das Feedbackmodul weitergeleitet und bei entsprechender Bestätigung durch den Nutzer als Input für eine neue Verarbeitungskaskade eingespeist. Antizipierte Folgen einer ursprünglichen Aussage bzw. Steuerungsbefehles können so von CES über mehrere Folgeereignisse hinaus überprüft werden.

Während der Analyse auftretende Konflikte oder zusätzlicher Wissensbedarf werden über das Feedbackmodul dem Nutzer gemeldet und ggf. Eingaben angefordert. Die Rückmeldungstiefe ist variabel wählbar.

Ist die Verarbeitung der sprachlichen Eingabe abgeschlossen, in Steuerkommandos für die nachgeschaltete technische Anlage umgesetzt werden. Der Kommandogenerator kann den Begriffen Kommandos zuordnen. Der Kommandogenerator als Schnittstelle zu einem Fremdsystem ist jeweils nutzerspezifisch angepasst. Dabei wird die Bedeutung der technischen Kommandos und Systemzustände mit denselben begrifflichen Strukturen kodiert, die CES zur Bedeutungserfassung des sprachlichen Inputs verwendet. Der sich hieraus ergebende Verarbeitungsverlauf
Sprache -> Sprachbedeutung -> Kommandobedeutung -> technische Steuerung
verdeutlicht die enge Verzahnung zwischen der Bedeutung der sprachlichen Anweisung und der Bedeutung der Steuerungskommandos. Sprachliche Anweisung des Nutzers auf der einen und Sprachverarbeitung & Steuerung durch CES auf der anderen Seite beruhen auf einer identischen begrifflichen Logik. Das System "denkt menschlich", wodurch kommunikative Missverständnisse (etwa durch ein falsches Verständnis von Schlüsselwörtern durch den Nutzer) vermieden werden.

Vorliegende Erfindung ermöglicht somit eine Schnittstelle zwischen Mensch und Maschine, welche die menschlichen Anweisungen in ihren Bedeutungen an eine Maschine, sei sie nun eine ganze Fabrik, ein Flugleitsystem oder lediglich ein Rechner, übertragen kann, so dass die Maschine in die Lage versetzt wird, Anweisungen und ähnliches in ihren Bedeutungen bzw. in ihren Wechselbeziehungen mit der aktuellen Situation zu erfassen und entsprechend umzusetzen. Insofern wird durch vorliegende Erfindung unmittelbar und ohne weitere äußere Einflüsse direkt eine Verbindung zwischen Mensch und Maschine geschaffen.

### Anwendungsbeispiel Dialoggestaltung am Beispiel einer Suchmaschine:

Durch die Bedeutungserfassung gelingt es, on-line Nutzerintentionen zu erkennen.

### Beispiel: Eingabe in eine Suchmaschine

### "Karpfen Hecht Forelle Hering"

Die Bedeutung der isolierten Begriffe und ihre Klassenzugehörigkeit wird extrahiert und an den Konnektor übergeben. Der Konnektor versucht, alle Begriffe sinnvoll zu verknüpfen. Ein Anforderungskode wird an die Künstliche Sprachintelligenz gesandt. KSIa analysiert den Kode und erkennt, dass alle Begriffe zur Klasse der Objekte gehören. Aus dem Pool der kognitive Routinen (KSIb) wird eine geeignete Verknüpfungsroutine an den Konnektor übergeben. Im konkreten Fall wählt KSIb ein Routine zum Auffinden von Gemeinsamkeiten, die zum Ergebnis "Speisefische" führt. Der Konnektor fügt den gefundenen Begriff hinzu und übergibt an die Konfliktanalyse folgende rekonstruierte Bedeutung: "Speisefische: Karpfen, Hecht, Forelle, Hering". Da die ursprüngliche Eingabe vom Konnektor um "Speisefische" erweitert wurde, wird das Feedbackmodul gestartet und die Rückfrage "Speisefische suchen?" initiiert. Bei Bestätigung wird der Kommandogenerator eine Suche in der angeschlossenen Datenbank nach dem Stichwort "Speisefische" initiieren und Treffer zu Karpfen, Hecht, Hering oder Forelle mit der höchsten Relevanz auflisten. Verneint der Nutzer, wird die ursprüngliche Eingabe verwendet (die Funktion der anderen Verarbeitungsmodule wird aus Gründen der Vereinfachung hier ignoriert und in den nachfolgenden Anwendungsbeispielen behandelt).

Macht der Nutzer zusätzliche Eingaben wird CES versuchen, diese mit der bisherigen sinnvoll zu verknüpfen (Ausnahme: Option "Neue Suche").

### Weiter Beispiele:

"Hecht" und "Blinker" initiiert die Anfrage "Anglerbedarf suchen?"
"Auto" und "Blinker" initiiert die Anfrage "Autoteile suchen?"
"Guppy" und "Goldfisch" initiiert die Anfrage "Zierfischhandlung suchen?"
"Guppy" und "Hamster" initiiert die Anfrage "Tierhandlung suchen?"

Auf dem gegenwärtigen Stand der Technik können ähnliche Leistungen von Suchmaschine nur erbracht werden, wenn die abgefragten Datenbanken über strukturierte Kataloge verfügen. Diese müssen in aufwendiger Arbeit erstellt werden und mit der Anfrage kompatibel sein. Die Nutzerintentionen müssen also a priori bei der Katalogerstellung bekannt sein. CES erschließt die Intention des Nutzers dagegen online aus der Bedeutung der Anfragen und formuliert die Anfrage ggf. entsprechend um. Mit CES ausgestatte Suchmaschinen können daher Nutzerintentionen besser berücksichtigen und auch auf unstrukturierte Datenbanken zugreifen.

### Anwendungsbeispiel: Verbesserung der Spracherkennung durch die Identifikation sinnleerer Aussagen und logisch falscher Aussagen.

Aufgrund von Umgebungsgeräuschen oder undeutlicher Artikulation können akustische Spracherkenner einzelne Wörter nicht zu 100% korrekt identifizieren. In diesem Falle werden mögliche wahrscheinliche Alternativen mitaktiviert. Bei Texteingaben entstehen ähnliche Probleme durch Tippfehler. Auch die neuentwickelte Technik handschriftlicher Eingaben mittels Digitizer (spezieller Stift mit elektromagnetischer Spitze) an Tablett PC oder Laptops krankt an einer relativ hohen Fehlerrate bei der Worterkennung. In unserem Beispiel ist das Wort "Tasse" falsch als "Kasse" oder "Tasche" erkannt bzw. geschrieben worden. CES ist in der Lage, Fehler dieser Art anhand des Bedeutungskontextes zu erkennen und zu korrigieren.

### Eingabe: "Hanna kocht eine Kasse / Tasse / Tasche Kaffee".

Über das Lexikon greift der Extraktor auf das Weltwissen zu. Die Bedeutung der einzelnen Begriffe wird extrahiert, ihre Klassenzugehörigkeit bestimmt und die Information an den Konnektor übergeben. In einem iterativen Prozess versucht der Konnektor, sukzessiv alle Begriffe sinnvoll zu verknüpfen. Zunächst sendet der Konnektor einen Anforderungskode an die Künstliche Sprachintelligenz (KSI) . KSIa erkennt anhand des Kodes das anfordernde Modul und die zu verarbeitenden Begriffsklassen. Aus dem Pool der kognitiven Routinen (KSIb) wird eine geeignete Verknüpfungsroutine ausgewählt und an den Konnektor übergeben. Im vorliegendem Beispiel ergibt sich ein bedeutungstragender Zusammenhang nur unter Ausschluss der Begriffe "Tasche" und "Kasse". Diese isolierten Begriffe werden neben der rekonstruierten Bedeutung der Eingabe "Hanna kocht eine Tasse Kaffee" an das Konfliktmodul weitergegeben. Das Vorliegen ungebundener Begriffe wird als Konflikt erkannt und das Feedbackmodul gestartet. Bei einer niedrig eingestellten Feedbackschwelle wird eine Meldung an den Nutzer generiert ("Mit Hilfe der vorhandenen Wissensbasis kann kein Bezug zu "Tasche" und "Kasse" hergestellt werden. Aussage "Hanna trinkt eine Tasse Kaffee" akzeptieren?"). Bei hoher Feedbackschwelle wird die rekonstruierte Bedeutung akzeptiert und die Begriffe "Kasse" und "Tasche" werden von der weiteren Verarbeitung ohne Rückmeldung ausgeschlossen.

### Anwendungsbeispiel: Die Konfliktanalyse als Mittel zur automatischen zeitweiligen situationsabhängigen Sperrung sprachlich gegebener Steuerungsanweisungen

Die Konfliktanalyse überprüft, ob die rekonstruierte Bedeutung einer Aussage im aktuellen Situationskontext angemessen ist. Der aktuelle Situationskontext ist im Situationsmodell gespeichert. Wurde vor der ersten Eingabe keine abgespeicherte Situation geladen, ist das Situationsmodell leer.

### 1. Eingabe: "Hannas Kaffeemaschine ist kaputt."

Über das Lexikon greift der Extraktor auf das Weltwissen zu. Die Bedeutung der einzelnen Begriffe wird extrahiert, ihre Klassenzugehörigkeit bestimmt und die Information an den Konnektor übergeben. Da im Vergleich zum ersten Anwendungsbeispiel andere Begriffsklassen in der Aussage enthalten sind, sendet der Konnektor einen anderen Kode. Dementsprechend stellt KSI diesmal neben der Verknüpfungsroutine zwei weitere kognitive Routine zur Verfügung: eine zur kontextabhängigen Modifikation und eine zur Assoziation.

Im Gegensatz zum vorherigen Beispiel gelingt hier die Verknüpfung aller beteiligten Begriffe; was schematisch folgendermaßen dargestellt werden kann:
"Kaffeemaschine → Hanna; kaputt → Kaffeemaschine".

Bei der Konfliktanalyse werden keine ungebundenen Begriffe gefunden, das Feedbackmodul nicht aktiviert. Die Konfliktanalyse sendet einen Kode an KSIa, der eine Abfrage des Situationsmodells initiiert. KSIc kann keine Information bereitstellen: das Situationsmodell ist noch leer (es handelt sich um die erste Eingabe). Da keine Information zu verarbeiten ist, erübrigt sich die Bereitstellung einer kognitiven Routine durch KSIb. Mit der Rückgabe einer Nullinformation von KSI wird die Konfliktanalyse beendet. Ist das Ergebnis der nachfolgenden Expertise ebenfalls Null (angenommener Fall), übernimmt der Virtuelle Realizer. Der Modifikator führt die von KSI bereitgestellten kognitiven Routinen zur Assoziation (Kaffeemaschine → Hanna) und Modifikation (kaputt → Kaffeemaschine) aus und leitet das Ergebnis an das Situationsmodell weiter. Der Antizipator liefert Null. Wenn kein technisches System angeschlossen ist (angenommener Fall), ist die Analyse der ersten Eingabe beendet.

### 2. Eingabe: "Hanna kocht mit ihrer Kaffeemaschine eine Tasse Kaffee"

Zunächst verläuft die Analyse reibungslos wie beschrieben. Der Konnektor verknüpft alle Begriffe erfolgreich zu einem bedeutungstragenden Zusammenhang:
"Kaffeemaschine **→** Hanna; kochen → Hanna → Kaffee → Tasse → Kaffeemaschine"
und übergibt an die Konfliktanalyse. Die Konfliktanalyse sendet einen Kode, der u.a. Informationen über die zu analysierenden Begriffsklassen und das anfragende Modul enthält, an die Künstliche Sprachintelligenz. Entsprechend dem von KSIa analysiertem Kode initiiert KSIc eine Suche im Situationsmodell. KSIc extrahiert aus dem Situationsmodell jene Informationen, die den im Kode spezifizierten Begriffsklassen entsprechen. Da KSIc Informationen bereitstellt, werden durch KSIb dem o.g. Kode entsprechende kognitive Routinen ausgewählt. Nach erfolgter Wissensfokussierung werden kognitive Routinen und die aus dem Situationsmodell extrahierten Information an die Konfliktanalyse übergeben. Die Konfliktanalyse führt mit den bereitgestellten Routinen Prozeduren aus, die zu folgenden Ergebnissen führen:
a). Match: Kaffeemaschine → Hanna (2. Eingabe) ist identisch mit
   Kaffeemaschine → Hanna (Situationsmodell)
b). Inferenz: Kaffeemaschine → Hanna (Situationsmodell) ist kaputt
   Kaffeemaschine → Hanna (2. Eingabe) ist kaputt
c). Konflikt: kochen → Kaffee → Kaffeemaschine ← kaputt.

Der entdeckte Konflikt aktiviert das Feedbackmodul. Bei niedrig eingestellter Feedbackschwelle ergeht folgende Rückmeldung an den Nutzer:
"Eingabe "Hanna kocht mit ihrer Kaffeemaschine eine Tasse Kaffee" steht im Konflikt mit der aktuellen Situation da Kaffeemaschine kaputt. Eingabe trotzdem realisieren?".

Bei hoch eingestellter Feedbackschwelle wird die Aussage ohne Kommentar abgelehnt. Im Falle nachgeschalteter technischer Systeme werden Steuerungskommandos, die mit der aktuellen Situation in Konflikt stehen, blockiert. Da in das Situationsmodell auch Daten über den aktuellen Systemzustand eingespeist werden können, ist so eine zeitweilige situationsabhängige Sperrung von Steuerungseingriffen möglich.

Auf dem gegenwärtigen Stand der Technik wird versucht, sinnvolle Beziehungen zwischen den Wörtern einer Aussage mit statistischen Verfahren zu erkennen. Sinnleere Aussagen können auf diese Weise jedoch nicht erkannt werden: ihre Unterscheidung von nicht gelernten Wortkombinationen ist problematisch. Auch das Erkennung von situationsabhängigen Konflikten ist mit statistischen Verfahren ebenso wie mit Hilfe sog. Neuronaler Netze nicht mit ausreichender Eindeutigkeit möglich.

Die Bedeutungserfassung von CES beruht nicht auf dem Lernen von Übergangswahrscheinlichkeiten. CES kann beliebige Kombinationen aller in der Wissensbasis enthaltener Begriffe verarbeiten, da die Bedeutungsrekonstruktion online mittels kognitiver Routinen erfolgt. Sind im erstgenannten Beispiel in anderen inhaltlichen Kontexten sinnvolle Beziehungen zwischen "Kaffee" und "Tasche" oder "Kasse" möglich, werden diese von CES rekonstruiert. So könnte z.B. Hanna eine Tasse Kaffe an der Kasse bezahlen. Hanna kann den Kaffe u.U. dann sogar in ihre Tasche schütten. Dies führt zu einem weiteren Anwendungsbeispiel.

### Anwendungsbeispiel: Funktion der Expertise als zusätzliches Sicherheitsfeature bei der Analyse sprachlich gegebener Informationen.

Eingabe: "Hanna gießt Kaffee in die Tasche".

Die Analyse folgt zunächst dem beschriebenen Ablauf: dem Konnektor gelingt mit Hilfe der von KSI bereitgestellten Routinen die Verknüpfung aller Begriffe in einen bedeutungstragenden Zusammenhang. Nach der Konfliktanalyse (angenommener Fall: Ausgabe Null) beginnt die Expertise mit der Weitergabe eines entsprechenden Kodes an KSIa. Da die Anfrage von der Expertise kommt, initiiert KSIa eine Suche im Expertenwissen. KSIc extrahiert aus dem Expertenwissen jene Informationen, die den im Kode spezifizierten Begriffsklassen entsprechen. Da KSIc Informationen bereitstellt, wird durch KSIb eine dem o.g. Kode entsprechende kognitive Routine ausgewählt. Diese kognitive Routine wird gemeinsam mit der aus dem Expertenwissen extrahierten Information an die Expertise übergeben. Die der Expertise bereitgestellte Routine führt Prozeduren aus, die zu folgenden Ergebnissen führen:
a). Analyse: im Situationskontext Kaffee = Flüssigkeit im Situationskontext Kaffee → Lokation Tasche
b). Inferenz: Flüssigkeit → Lokation Tasche
c). Expertise: Tasche # Behälter für Flüssigkeit
d). Konflikt: Lokation Tasche → Kaffee

Der entdeckte Konflikt aktiviert das Feedbackmodul. Bei niedrig eingestellter Feedbackschwelle ergeht folgende Rückmeldung an den Nutzer:
"Laut vorhandenem Expertenwissen ist Tasche ungeeignet. Eingabe "Hanna gießt Kaffee in die Tasche" trotzdem realisieren?".

Bei hoher Feedbackschwelle wird die Aussage ohne Kommentar abgelehnt bzw. im Falle eines Kommandos (z.B. an einen Roboter: "gieß den Kaffee in die Tasche) wird die Ausführung blockiert.

### Anwendungsbeispiel: Funktion des Virtuellen Realizers. Vorausschauende Risikoanalyse.

Verfolgen wir die weitere Analyse der Eingabe:
"Hanna gießt Kaffee in die Tasche".

Besteht der Nutzer trotz der Warnung durch die Expertise auf einer Realisierung der Eingabe, übernimmt der Virtuelle Realizer. Der Modifikator fixiert eventuelle mit der rekonstruierten Aussage verbundene Veränderungen und leitet diese an das Situationsmodell weiter. Der Antizipator arbeitet nach dem bereits anhand der anderen Module beschrieben Prinzipien: durch Weitergabe eines Kodes an KSIa werden von KSIb die entsprechenden kognitiven Routinen bereitgestellt. Da die Anfrage vom Antizipator kommt, wendet KSI diese Routinen auf das Weltwissen an. Es wird überprüft, ob sich für die rekonstruierte Bedeutung im Weltwissens Verknüpfungen zu Folgereignissen ergeben. Ist die Suche erfolgreich, wird die gefundene Verknüpfung an das Feedbackmodul übergeben:
"Eingabe "Hanna gießt Kaffee in die Tasche" kann mit "auslaufen" verknüpft werden. Verknüpfung analysieren?"

Stimmt der Nutzer zu, wird "auslaufen" an den Extraktor übergeben. CES wird im weiteren die sinnvolle Aussage:
"Der Kaffe läuft aus der Tasche."
generieren und den Nutzer somit auf potentielle Gefährdungen, die durch die erste Aussage:
"Hanna gießt Kaffee in die Tasche".
entstehen können, warnen.

CES ist in der Lage, sehr viel genauere Gefahrenabschätzungen vorzunehmen. Die Folgen einer Anweisung z.B. "Gies Säure (konkrete Angabe) in das Gefäß (konkrete Angabe)" können bei ausreichendem Expertenwissen zu präzisen Vorhersagen führen, ob die Säure das Gefäß zerfrisst, ausläuft und welche potentiellen Gefährdungen in der Umgebung (bei detailliertem Situationsmodell) auftreten können. Vor der Aktivierung des Kommandogenerators können auf diese Weise bei Bedarf mehrer Verarbeitungszyklen zu Abschätzung potentieller Folgen sprachlicher Anweisungen durchlaufen werden.

### Anwendungsbeispiel: Funktion des Antizipators bei der kontextabhängigen Disambiguierung.

Die kontextabhängige Disambiguierung durch den Virtuellen Realizer wird auch an den vom Antizipator vorgeschlagenen Verknüpfungen deutlich:

| | |
|---|---|
| Eingabe "fallen lassen Handtuch" Verknüpfung: keine | → vorgeschlagene |
| Eingabe "fallen lassen Glas" Verknüpfung: "zerbrechen" | → vorgeschlagene |
| Eingabe "fallen lassen Wort" Verknüpfung: "sprechen". | → vorgeschlagene |

### Anwendungsbeispiel: Funktion des Modifikators bei der kontextabhängigen Disambiguierung.

Die kontextabhängige Disambiguierung sprachlich identisch lautender Begriffe (hier: "steigt") führt zu Konsequenzen, die nicht sofort an der Oberfläche für den Nutzer sichtbar sein müssen. So findet in den nachfolgenden Beispielen jeweils eine qualitativ unterschiedliche Modifikation im Situationsmodell statt:
Eingabe "Der Aktienkurs steigt um 3%."

Situationsmodell: Modifikation Wert der Aktie → + 3%.
Eingabe "Hanna steigt in die Bahn."

Situationsmodell: Modifikation Lokation Hanna → Bahn.

### Anwendungsbeispiel: Nutzung von CES zur Sprachsteuerung eines mobilen Büroroboters mit Fähigkeit zur Navigation und Personenerkennung.

Beim gegenwärtigen Stand der Technik erfolgt die Sprachsteuerung über isolierte Schlüsselwörter bzw. deren Klang. Bei den Eingaben:
"Robby bring mir Kaffee"
"Robby hole meine Post"
wird der Roboter durch das Schlüsselwort "Robby" aktiviert und erwartet eine Navigationsanweisung. "Kaffe" aktiviert den einprogrammierten Ort "Kaffeeautomat",

"Post" aktiviert den voreingestellten Ort "Poststelle". Der Roboter navigiert zum mit dem jeweiligen Schlüsselwort fest verknüpften Ort und zurück zum Sprecher. Die anderen Wörter der Eingabe werden ignoriert.

Daher führen auch Eingaben wie:
"Robby bade im Kaffee" oder "Robby frankiere meine Post"
ebenfalls zum Ergebnis des Holens.

Schlüsselwortsteuerungen sind ungeeignet, sobald der Roboter in der Lage ist, andere Aktionen als das Holen auszuführen. Aber selbst relativ einfache Hol-Anweisungen wie:
"Robby bring Hanna Kaffee in das Labor" sind ohne Verstehenskomponente nicht mehr realisierbar. Das folgende Ausführungsbeispiel demonstriert die Vorteile einer auf der Bedeutungserfassung basierenden Robotersteuerung durch CES. Voreinstellungen der o.g. Art (z.B. Ort Kaffeeautomat) werden im Expertenwissen hinterlegt.

Eingabe: "Robby bring mir Kaffee".

Die Verarbeitung der sprachlichen Eingabe folgt dem bereits beschriebenem Verlauf. Der Extraktor übermittelt an den Konnektor Begriffsklasse und Bedeutung der einzelnen Wörter. Die künstliche Sprachintelligenz stellt dem Konnektor die geeigneten Verknüpfungsroutinen zur Verfügung. Alle Begriffe können erfolgreich verknüpft werden, die Konfliktanalyse ergibt keine Konflikte. Der Expertise wird für die Eingabe "Robby bring mir Kaffee" folgende rekonstruierte Bedeutung übermittelt:
"Robby → Lokation Kaffee {0} → Lokation Empfänger {0}".

Da "Robby" als handelnde Person erkannt wurde, prüft die Expertise zunächst, ob es sich in der Anweisung um eine für den Roboter eingetragene (bzw. zugelassene) Aktion handelt. Ist dies nicht der Fall, erfolgt eine Rückmeldung an den Nutzer:" Robby kann Anweisung nicht ausführen". Im gegebenen Fall findet KSIc im Expertenwissen für die Aktion "Robby → Kaffee holen" die voreingestellte Lokation Kaffee {Kaffeeautomat} und Lokation Empfänger {Sprecher}. Die Expertise füllt die Leerstellen
"Lokation Kaffee {0}" mit der Voreinstellung "Lokation Kaffee {Kaffeeautomat}"
"Lokation Empfänger {0}" mit "Lokation Empfänger {Sprecher}".

Die entsprechenden Leerstellen können jedoch bereits durch die sprachliche Eingaben definiert worden sein. Die Eingabe: "Robby hol mir Kaffe aus der Küche" wird wie folgt interpretiert:
"Robby → Lokation Kaffee {Küche} → Lokation Empfänger {0}".

In diesem Fall wird die Voreinstellung "Kaffeemaschine" ignoriert.

Die durch die Expertise vervollständigte Bedeutung der Eingabe wird an den Virtuellen Realizer weitergegeben. Gleichzeitig wird ein Kode übermittelt der anzeigt, dass es sich um eine Anweisung für das angeschlossene technische System (den Roboter "Robby") handelt. Da durch den Virtuellen Analyzer keine Folgeereignisse antizipiert werden, wird die rekonstruierte Bedeutung an den Kommandogenerator übergeben. Wie unschwer zu erkennen ist, entspricht die gefundene Interpretation der sprachlichen Eingabe:
"Robby → Lokation Kaffee {Küche} → Lokation Empfänger {Sprecher}"
bereits einer ausführbarem Kommandosequenz, die über den Kommandogenerator in Verbindung mit einer spezifischen Schnittstelle umgesetzt werden kann.

Durch die Ausrüstung mit CES können "mitdenkende" Roboter geschaffen werden, wie die folgende Situation verdeutlicht. Angenommen, in einem Gespräch wird die Aussage getroffen: "Hanna ist im Labor". Im Situationsmodell des mithörenden Roboters nimmt CES die Modifikation vor "Lokation Hanna → Labor". Bei einer nachfolgenden sprachlichen Eingabe: "Robby bring Hanna Kaffee" wird die in der Anweisung enthaltene Leerstelle "Lokation Hanna {0}" durch den im Situationsmodell enthaltenen Eintrag "Lokation Hanna → Labor" vervollständigt. Der Roboter navigiert selbständig an den korrekten Ort.

### Anwendungsbeispiel: Nutzung von CES zur automatischen Erfassung der Bedeutung sprachlicher Anweisungen im Luftverkehr.

Das Patent DE 694 13 031 T2 beschreibt ein Verfahren zur automatischen Interpretation von Flugsicherungsanweisungen, die auf einer syntaktischen Analyse und der Suche nach einzelnen vorher bestimmten Schlüsselwörtern beruht. Demgegenüber ermöglicht die vorliegende Erfindung die Bedeutungsrekonstruktion auch syntaktisch/grammatikalisch falscher sprachlicher Anweisungen. Darüber hinaus ermöglicht die vorliegende Erfindung einen automatischen Abgleich der sprachlich gegebenen Anweisungen mit den resultierenden bzw. ausgeführten Aktionen/Steuerungseingriffen. Auftretende Konflikte können automatisch erkannt und rückgemeldet werden. Im nachfolgenden Anwendungsbeispiel läuft CES zur Analyse des Funkkontaktes zwischen Tower und Luftfahrzeug im Hintergrund mit.
Tower: "D IL rollen sie zum Rollhalteort A2 Startbahn 32."

Die Verarbeitung der sprachlichen Eingabe folgt dem bereits beschriebenem Verlauf. Der Extraktor übermittelt an den Konnektor Begriffsklasse und Bedeutung der einzelnen Wörter. Die künstliche Sprachintelligenz stellt dem Konnektor die geeigneten Verknüpfungsroutinen zur Verfügung. Alle Begriffe können erfolgreich verknüpft werden. An die Konfliktanalyse wird folgende Bedeutung übergeben:
"D IL → Lokation {aktuell} → Lokation {A2}".

Im Rahmen der Konfliktanalyse wird geprüft, ob im Situationsmodell Rollhalteort A2 frei ist. Ist dies nicht der Fall, wird der erkannte Konflikt über das Feedbackmodul gemeldet: "Anweisung im aktuellen Kontext nicht ausführbar. A2 besetzt durch D IK".

Angenommen, im späteren Verlauf sendet Luftfahrzeug D IL folgende Meldung an den Tower:
"D IL Rollhalteort A2, Startbahn 32 rechts abflugbereit".

Die Verarbeitung der sprachlichen Eingabe folgt dem bereits beschriebenem Verlauf; bei der Virtuellen Realisierung erkennt der Antizipator die Verknüpfung zum möglichen Folgeereignis "start". Eine automatische Verarbeitung des (antizipierten) Inputs
"D IL Rollhalteort A2, Startbahn 32 rechts Start"
wird initiiert und folgt dem bereits beschrieben Verlauf. Ist im Expertenwissen definiert, dass ein Start nur nach erfolgter Startfreigabe durch den Tower erfolgen darf (angenommener Fall), wird die weitere Verarbeitung bis zum Erhalt der sprachlichen Anweisung vom Tower:
"D IL Start frei ..."
blockiert. Der Input "D IL Rollhalteort A2, Startbahn 32 rechts Start" wird also erst nach der Startfreigabe an den Kommandogenerator übergeben, d.h. die mit der Startprozedur verbundenen Steuereingriffe am Luftfahrzeug werden vom Kommandogenerator vorher nicht akzeptiert oder zumindest (im Falle eines notwendigen Notstarts) wird vom CES über das Feedbackmodul folgende Meldung an den Piloten ausgegeben:
"Startfreigabe "D IL Rollhalteort A2, Startbahn 32 rechts Start" nicht erteilt".

Wie der Fachmann unschwer erkennt, können je nach Detailausprägung von Expertenwissen, Kommandogenerator und Situationsmodell weitere Sicherheitshinweise/Warnungen durch die automatische Erfassung der Bedeutung sprachlicher Anweisungen im Luftverkehr mittels der vorliegenden Erfindung gegeben werden.

## Patentansprüche

1. Sprachverarbeitendes System zur Verarbeitung von sprachlichem Input umfassend mehrere Wörter, wobei das System umfasst:
- zumindest einen Extraktor als Einrichtung zur lexikalischen Zuordnung der zu verarbeitenden Worte und
- zumindest einen Konnektor als Einrichtung zur Verknüpfung der lexikalisch zugeordneten Sprache zu einer Aussage,
**dadurch gekennzeichnet, dass**
- das System eine allgemeine Wissensbasis umfasst, in der Begriffe, die einzelnen Wörtern entsprechen, ohne eine Beziehung zwischen den Wörtern abgelegt sind;
- der Extraktor Zugriff auf die Wissensbasis hat;
- der Extraktor die einzelnen Wörter des sprachlichen Inputs sukzessive verarbeitet und auf die Wissensbasis zugreift und Begriffe ermittelt, die der jeweils isolierten Bedeutung der einzelnen Wörter entsprechen; und
- der Konnektor die extrahierten Begriffe situationsabhängig und dynamisch zu einer Aussage verknüpft.

2. Sprachverarbeitendes System nach Anspruch 1, **dadurch gekennzeichnet, dass** der Extraktor die zu verarbeitenden Wörter des sprachlichen Inputs auf ihre Grundform, also auf Infinitive, Nominative u.ä., reduziert.

3. Sprachverarbeitendes System nach Anspruch 1 oder 2, **dadurch gekennzeichnet, dass** nicht verknüpfte Begriffe markiert werden und vorzugsweise ein Fehlerzustand angenommen wird, wenn die Zahl der nicht verknüpften Begriffe eine definierte Anzahl übersteigt.

4. Sprachverarbeitendes System nach einem der Ansprüche 1 bis 3, **dadurch gekennzeichnet, dass** das System umfasst:
- ein Konfliktmodul,
- ein Feedbackmodul,
- eine Experteneinrichtung zur Risikoanalyse,
- einen virtuellen Realizer zur Umsetzung der rekonstruierten Bedeutung,
- einen dem Konnektor nachgeschalteten Modifikator zur eventuell notwendigen Veränderung der in der im Konnektor gewonnenen Aussage enthaltenen Begriffe und/oder
- einen Anitizipator zum Aufruf potentieller Folgeereignisse als Verarbeitungsmodule.

5. Sprachverarbeitendes System nach einem der Ansprüche 1 bis 4, **dadurch gekennzeichnet, dass** der Konnektor nicht zu verknüpfende Teile der zu verknüpfenden Sprache, insbesondere nicht zu verknüpfende Begriffe, und/oder hinzugefügte Worte oder Begriffe einem Feedbackmodul zur Überprüfung durch den Nutzer oder eine sonstige externe Instanz weiterleitet.

6. Sprachverarbeitendes System nach einem der Ansprüche 1 bis 5, **dadurch gekennzeichnet, dass** das System umfasst: - einen Kommandogenerator, der den Begriffen Kommandos zuordnet.

7. Sprachverarbeitendes System nach Anspruch 6, **dadurch gekennzeichnet, dass** die zugeordneten Kommandos des Kommandogenerators in ihren begrifflichen Strukturen den begrifflichen Strukturen der vom Konnektor genutzten Begriffe entsprechen.

8. Sprachverarbeitendes System nach einem der Ansprüche 1 bis 7, **dadurch gekennzeichnet, dass** das System umfasst:
- ein Situationsmodell, welches mit dem Extraktor, dem Konnektor und/oder wenigstens einem anderen Verarbeitungsmodul des sprachverarbeitenden Systems derart verknüpft ist, dass in dem Extraktor, in dem Konnektor und/oder in dem anderen Verarbeitungsmodul befindliche Begriffe oder Aussagen entsprechend des zustands des Situationsmodells bewertet werden.

9. Sprachverarbeitendes System nach Anspruch 8, **dadurch gekennzeichnet, dass** das Situationsmodell derart mit dem Extraktor, dem Konnektor und/oder wenigstens einem weiteren Verarbeitungsmodul verknüpft ist, dass in dem Extraktor, in dem Konnektor und/oder in dem wenigstens einen weiteren Verarbeitungsmodul befindliche Begriffe oder Aussagen den Zustand des Situationsmodells verändern.

10. Sprachverarbeitendes System nach Anspruch 8 oder 9, **dadurch gekennzeichnet, dass** das Situationsmodell eine Schnittstelle zu einer Messeinrichtung aufweist.

11. Sprachverarbeitendes System nach Anspruch 10, **dadurch gekennzeichnet, dass** die Schnittstelle den Messwerten Begriffe zuordnet und diese Messwerte und/oder Systemzustände nachgeschalteter technischer Anlagen im Situationsmodell durch Begriffe repräsentiert sind.

12. Sprachverarbeitendes System nach einem der Ansprüche 1 bis 11, **dadurch gekennzeichnet, dass** das System umfasst:
- ein KSI-Modul, welches über eine Menge cognitiver Routinen verschiedener Klassen verfügt, insbesondere Routinen zur Bedeutungsextraktion, zur kontextgebundenen Modifikation, zur kontextgebundenen Assoziation und für Schlussprozesse (Inferenzen) und diese dem Extraktor, dem Konnektor und/ oder einem anderen Verarbeitungsmodul des sprachverarbeitenden Systems bereitstellt.

13. Sprachverarbeitendes System nach Anspruch 12, **dadurch gekennzeichnet, dass** das KSI-Modul dem jeweils anfragenden Verarbeitungsmodul die cognitive Routinen in Abhängigkeit von den zu verarbeitenden Begriffsklassen zur Verfügung stellt.

14. Sprachverarbeitendes System nach Anspruch 12 oder 13, **dadurch gekennzeichnet, dass** das KSI-Modul Routinen zur Bedeutungsextraktion bereitstellt, die auf ein Situationsmodell, einen Speicher für eine globale Wissensbasis und/oder auf einen Speicher für Expertenwissen zurückgreifen.

15. Sprachverarbeitendes System nach einem der Ansprüche 12 bis 14, **dadurch gekennzeichnet, dass** das KSI-Modul oder dessen cognitive Routinen auf Weltwissen, Situationsmodell und/oder Expertenwissen zurückgreifen.

16. Verfahren zur Zuordnung von akustischen und/oder schriftlichen Zeichenketten zu Wörtern bzw. lexikalischen Einträgen, insbesondere zur Spracherkennung bzw. zur Handschriftenerkennung, **dadurch gekennzeichnet, dass** zumindest bei unklarer oder fehlerhafter Erkennung von Wörtern und/oder lexikalischer Einträge bzw. bei dem Vorliegen mehrerer möglicher Alternativen ein sprachverarbeitendes System nach einem der Ansprüche 1 bis 15 verwendet wird.

17. Verfahren nach Anspruch 16, **dadurch gekennzeichnet, dass**
- auf ein sprachspezifisches Lexikon zugegriffen wird,
- aus dem Lexikon Begriffe extrahiert werden,
- die zu verarbeitende Sprache auf Grundformen, also auf Infinitive, Nominative u.ä., reduziert wird, und
- der zu verarbeitenden Sprache die extrahierten Begriffe zuordnet werden, die der jeweils isolierten Bedeutung von einzelnen Wörtern der zu verarbeitenden Sprache entsprechen.

18. Verfahren nach Anspruch 16 oder 17, **dadurch gekennzeichnet, dass** das Verfahren zur Flug- oder Rollfeldsicherung verwendet wird, wobei sprachliche Anweisungen in ihrer Bedeutung erfasst und in ihren Konsequenzen antizipiert werden.

19. Verfahren nach Anspruch 18, **dadurch gekennzeichnet, dass** eine Flug- bzw. Rollfeldsituation maschinell erfasst wird.

20. Verfahren nach Anspruch 18 oder 19, **dadurch gekennzeichnet, dass** die erfasste Flug- bzw. Rollfeldsituation bei der Antizipierung der Konsequenzen berücksichtigt bzw. ebenfalls antizipierend verarbeitet wird.

## Claims

1. A language-processing system for processing a speech input consisting of one or more words wherein the system includes:
- at least one extractor as a device for the lexical assignment of the words being processed and
- at least one connector as a device for linking the lexically assigned speech to form a statement,
wherein,
- the system includes a general knowledge base, in which concepts represented by individual words are stored independent of their relation to each other;
- the extractor has access to a separate global knowledge base (world knowledge);
- the extractor processes the individual words of the speech input successively and accesses the knowldge base identifying concepts which correspond to the isolated meaning of the individual words; and
- the connector links the extracted concepts situation-dependent and dynamic forming a statement.

2. A language-processing system as recited in Claim 1, wherein, the extractor reduces the words in the speech being processed to their basic forms i.e., to infinitives, nouns etc.

3. A language-processing system as recited in Claims 1 or 2, wherein, unlinked concepts are marked and, advantageously, an error condition is assumed if the number of unlinked concepts exceeds a predefined number.

4. A language-processing system as recited in Claims 1 to 3, wherein, the system includes:
- a conflict module,
- a feedback module,
- an expert device for risk analysis,
- a virtual realizer for realizing the reconstructed meaning,
- a modifier, that is attached downstream of the connector, for any necessary change of the concepts contained in the statement arrived at in the connector, and/or
- an anticipator for calling up potential subsequent events as processing modules.

5. A language-processing system as recited in Claims 1 to 4, wherein, the connector conveys the unlinkable parts of the speech being linked, especially the unlinkable concepts, and/or added words or concepts to a feedback module for checking by the user or by another external entity.

6. A language-processing system as recited in Claims 1 to 5, wherein, the system includes:
- a command generator, which assigns commands to concepts.

7. A language-processing system as recited in Claim 6, wherein, the assigned commands of the command generator in their conceptual structures correspond to the conceptual structure of the concepts used by the connector.

8. A language-processing system as recited in Claims 1 to 7, wherein, the system includes:
- a situation modell, which is linked to the extractor, the connector, and/or at least one other processing module of the language-processing system, such that concepts or statements that are located in the extractor, the connector, and/or the other processing module are evaluated in accordance with the condition of the situation model.

9. A language-processing system as recited in Claim 8, wherein, the situation model is linked to the extractor, the connector, and/or at least one other processing module, such that concepts or statements located in the extractor, the connector, and/or the other processing module alter the condition of the situation model.

10. A language-processing system as recited in Claims 8 or 9, wherein, the situation model has an interface to a measuring device.

11. A language-processing system as recited in Claim 10, wherein, the interface assigns concepts to the measuring values, and these measuring values and/or system conditions of downstream technical installations are represented by concepts in the situation model.

12. A language-processing system as recited in Claims 1 to 11, wherein, the system includes:
- an ALI module, which contains a quantity of cognitive routines of various classes, and especially makes available routines for the extraction of meaning, context-bound modification, context-bound association, and logical processes (inferences), and makes them available to the extractor, the connector, and/or another module of this language-processing system.

13. A language-processing system as recited in Claim 12, wherein, the ALI module, which makes available the cognitive routines to the specific querying processing module as a function of the categories being processed.

14. A language-processing system as recited in Claims 12 or 13, wherein, the ALI module makes available routines for the extraction of meaning, which have recourse to a situation model, a memory for a global knowledge base, and/or a memory for expert knowledge.

15. A language-processing system as recited in Claims 12 to 14, wherein the ALI module or its cognitive routines have recourse to the world knowledge, situation model, and/or expert knowledge modules.

16. A method for assigning acoustical and/or written character strings to words or lexical entries, especially for speech recognition or for handwriting recognition, wherein at least in the event of an unclear or erroneous recognition of words and/or lexical entries or in response to the presence of multiple possible alternatives, a system as recited in Claims 1 through 15 will be applied.

17. A method as recited in Claim 16, wherein,
- a language-specific lexicon is accessed,
- concepts are extracted using the lexicon,
- the speech being processed is reduced to it basic forms i.e., to infinitives, nouns, etc. and
- the extracted concepts are assigned to the language to be processed, corresponding to the isolated meaning of the individual words of the language to be processed.

18. A method as recited in Claim 16 or 17, wherein the method is applied to flight or taxiway security, wherein the meaning of speech instructions is captured and their consequences are anticipated.

19. A method as recited in Claim 18, **characterized by** a machine-type understanding of the flight or taxiway situation.

20. A method as recited in Claim 18 or 19, wherein the comprehended flight or taxiway situation is taken into account or also processed in an anticipatory manner, in foreseeing the consequences.

## Revendications

1. Système de traitement de la parole permettant de traiter une entrée vocale comportant plusieurs mots, moyennant quoi le système comprend :
- au moins un extracteur, sous la forme d'un dispositif permettant l'affectation lexicale des mots à traiter et
- au moins un connecteur, sous la forme d'un dispositif permettant d'associer la parole affectée lexicalement à une déclaration,
**caractérisé en ce que**
- le système comporte une base de connaissances générale, dans laquelle sont intégrés les concepts qui correspondent aux différents mots, sans lien entre les mots ;
- l'extracteur a accès à la base de connaissances ;
- l'extracteur traite successivement les différents mots de l'entrée vocale et accède à la base de connaissances et détermine les concepts qui correspondent respectivement à la signification isolée des différents mots ; et
- le connecteur associe les concepts extraits, en fonction de la situation et par voie dynamique, à une déclaration.

2. Système de traitement de la parole selon la revendication 1, **caractérisé en ce que** l'extracteur réduit les mots à traiter de l'entrée vocale sous leur forme fondamentale, donc infinitive, nominale, etc.

3. Système de traitement de la parole selon la revendication 1 ou 2, **caractérisé en ce que** les concepts non associés sont repérés et on adopte de préférence un état d'erreur lorsque le nombre des concepts non associés dépasse un nombre défini.

4. Système de traitement de la parole selon l'une quelconque des revendications 1 à 3, **caractérisé en ce que** le système comporte :
- un module de conflit,
- un module de rétroaction,
- un dispositif expert pour l'analyse des risques,
- un réaliseur virtuel permettant de convertir la signification reconstruite,
- un modificateur monté en aval du connecteur, permettant de modifier en cas de besoin les concepts contenus dans la déclaration obtenue dans le connecteur, et/ou
- un anticipateur permettant d'appeler les résultats répétitifs potentiels comme module de traitement.

5. Système de traitement de la parole selon l'une quelconque des revendications 1 à 4, **caractérisé en ce que** le connecteur transmet les éléments qui ne sont pas à associer de la parole à associer, en particulier les concepts qui ne sont pas à associer, et/ou les mots ou concepts ajoutés à un module de rétroaction à des fins de vérification par un utilisateur ou une autre instance externe.

6. Système de traitement de la parole selon l'une quelconque des revendications 1 à 5, **caractérisé en ce que** le système comporte :
- un générateur de commandes, qui affecte les commandes aux concepts.

7. Système de traitement de la parole selon la revendication 6, **caractérisé en ce que** les commandes affectées du générateur de commandes correspondent, quant aux structures conceptuelles, aux structures conceptuelles des concepts utilisés par le connecteur.

8. Système de traitement de la parole selon l'une quelconque des revendications 1 à 7, **caractérisé en ce que** le système comporte :
- un modèle de situation, qui est associé à l'extracteur, au connecteur et/ou à au moins un autre module de traitement du système de traitement de la parole, de telle sorte que les concepts ou déclarations présents dans l'extracteur, dans le connecteur et/ou dans l'autre module de traitement sont évalués en fonction de l'état du modèle de situation.

9. Système de traitement de la parole selon la revendication 8, **caractérisé en ce que** le modèle de situation est associé à l'extracteur, au connecteur et/ou à au moins un autre module de traitement de telle sorte que les concepts ou déclarations présents dans l'extracteur, dans le connecteur et/ou dans le au moins un autre module de traitement modifient l'état du modèle de situation.

10. Système de traitement de la parole selon la revendication 8 ou 9, **caractérisé en ce que** le modèle de situation présente une interface avec un dispositif de mesure.

11. Système de traitement de la parole selon la revendication 10, **caractérisé en ce que** l'interface affecte les concepts à des valeurs de mesure, et ces valeurs de mesure et/ou états de système des installations techniques montées en aval sont représentées dans le modèle de situation par des concepts.

12. Système de traitement de la parole selon l'une quelconque des revendications 1 à 11, **caractérisé en ce que** le système comporte :
- un module KSI, qui dispose d'une certaine quantité de sous-programmes cognitifs de différentes classes, en particulier de sous-programmes permettant l'extraction de signification, la modification liée au contexte, l'association liée au contexte et pour les processus de déduction (inférences) et transmettent ceux-ci à l'extracteur, au connecteur et/ou à un autre module de traitement du système de traitement de la parole.

13. Système de traitement de la parole selon la revendication 12, **caractérisé en ce que** le module KSI met respectivement à disposition du module de traitement demandeur les sous-programmes cognitifs en fonction des classes de concepts à traiter.

14. Système de traitement de la parole selon la revendication 12 ou 13, **caractérisé en ce que** le module KSI met à disposition des sous-programmes en vue de l'extraction de la signification, qui recourent à un modèle de situation, à une mémoire pour une base de connaissances globale et/ou à une mémoire pour les connaissances spécialisées.

15. Système de traitement de la parole selon l'une quelconque des revendications 12 à 14, **caractérisé en ce que** le module KSI ou ses sous-programmes cognitifs recourent à des connaissances mondiales, des modèles de situation et/ou des connaissances spécialisées.

16. Procédé d'affectation de chaînes de caractères acoustiques et/ou écrites à des mots ou entrées lexicales, en particulier pour la reconnaissance vocale ou la reconnaissance de langage écrit, **caractérisé en ce que**, au moins dans le cas d'une reconnaissance peu claire ou erronée de mots et/ou d'entrées lexicales ou s'il existe plusieurs alternatives possibles, on utilise un système de traitement de la parole selon l'une quelconque des revendications 1 à 15.

17. Procédé selon la revendication 16, **caractérisé en ce que** :
- on accède à un dictionnaire spécifique à la langue,
- on extrait des concepts du dictionnaire,
- on réduit la parole à traiter sous une forme fondamentale, à savoir infinitive, nominative, etc., et
- on affecte à la parole à traiter les concepts extraits, qui correspondent à la signification respectivement isolée des différents mots de la parole à traiter.

18. Procédé selon la revendication 16 ou 17, **caractérisé en ce que** le procédé est utilisé pour la sécurité sur les pistes aériennes ou de circulation, moyennant quoi les indications vocales sont détectées quant à leur signification et sont anticipées quant à leurs conséquences.

19. Procédé selon la revendication 18, **caractérisé en ce qu'**une situation sur une piste aérienne ou de circulation est détectée par machine.

20. Procédé selon la revendication 18 ou 19, **caractérisé en ce que** la situation détectée sur une piste aérienne ou de circulation est prise en considération lors de l'anticipation des conséquences ou également traitée par anticipation.
